(19) Europäisches Patentamt
European Patent Office
Office européen des brevets

(11) **EP 2 701 070 A1**

(12) **EUROPEAN PATENT APPLICATION**
published in accordance with Art. 153(4) EPC

(43) Date of publication:
**26.02.2014 Bulletin 2014/09**

(51) Int Cl.:
***G06F 13/00*** (2006.01)

(21) Application number: **12774439.9**

(22) Date of filing: **20.04.2012**

(86) International application number:
**PCT/JP2012/060673**

(87) International publication number:
**WO 2012/144584 (26.10.2012 Gazette 2012/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2011 JP 2011096252**
**22.04.2011 JP 2011096253**

(71) Applicant: **NEC Corporation**
**Tokyo 108-8001 (JP)**

(72) Inventor: **OZAWA, Kazunori**
**Tokyo 108-8001 (JP)**

(74) Representative: **Betten & Resch**
**Theatinerstrasse 8**
**80333 München (DE)**

(54) **CONTENT DISTRIBUTION SYSTEM, CONTROL DEVICE, AND CONTENT DISTRIBUTION METHOD**

(57) A control apparatus computes an access frequency for a content item stored in a plurality of cache servers that temporarily hold a content item based on a number of accesses to the content item, determines disposition of content items in the plurality of cache servers, using at least one of a load status of the plurality of cache servers, topology information of a mobile network, in-zone information of a terminal requesting a content item, and the access frequency to instruct the plurality of cache servers to obtain a content item according to the determined disposition, and, upon receipt of a request for a content item from the terminal, instructs a cache server that holds the content item among the plurality of cache servers to transmit the content item through a packet forwarding apparatus. Congestion is thereby avoided when the content is distributed via the mobile network.

FIG. 1

## Description

### TECHNICAL FIELD

(Cross-Reference to Related Applications)

The present invention is based upon and claims the benefit of the priorities of Japanese Patent Application No. JP2011-096252 filed on April 22, 2011 and Japanese Patent Application No. JP2011-096253 filed on April 22, 2011, the disclosures of which are incorporated herein in their entireties by reference thereto.

The present invention relates to a content distribution system, a control apparatus, and a content distribution method. More specifically, the present invention relates to a content distribution system, a control apparatus of the content distribution system, and a content distribution method configured to cache content (content item) such as a moving image, a still image, audio, software, or an application on a mobile network and then to distribute the cached content to a terminal such as a cellular phone, a smart phone, a PC (Personal Computer), or a game device.

### BACKGROUND

Due to an increase in speed and capacity of a mobile network, content distribution of distributing content to a mobile terminal via the mobile network is spreading. Due to LTE (Long Term Evolution) technology, EPC (Evolved Packet Core) technology, and the like, a further increase in the speed and the capacity of the mobile network is expected in the future.

Patent Literature (PTL) 1 describes a technology of achieving shortening of an access time and preventing network congestion by providing a cache apparatus for a content distribution system.

### CITATION LIST

### PATENT LITERATURE

[PTL 1]
JP Patent Kokai Publication No. JP-P2003-228534A

### SUMMARY

### TECHNICAL PROBLEM

The following analysis has been given by the inventor of the present invention.

It is predicted that an amount of traffic in a data system on the mobile network will increase from 8 times to 10 times the current amount of traffic by the year 2013, and that video contents will occupy most of the amount of traffic. Further, as the capabilities of a terminal improve due to the rapid spread of a smart phone, larger-capacity video contents are appearing. In the near future, high-definition and large-capacity contents are expected to be distributed via the mobile network as well.

On the other hand, when distribution of content such as an image, a moving image, audio, software, or an application is performed, a content distribution server receives requests for the content from all terminals through a packet forwarding apparatus, and distributes the content to all the terminals through the packet forwarding apparatus, in a conventional mobile network.

However, when the mobile network is configured as described above, the following problem will arise. Firstly, when accesses from the terminals are concentrated on content that is most popular among Internet contents, concentration of traffics to reach the content distribution server on the mobile network will occur, and then a load on the network will suddenly increase. Congestion will thereby occur on the mobile network. Especially when the number of the terminals increases or the capacity of content increases, the congestion will frequently occur. Then, a problem such as a delay or a packet loss, freezing of an image or stop of sound on a terminal side will also arise.

Secondly, it takes time for content to reach one of the terminals because a distance between the terminal and the content distribution server is long. Thus, there is a problem that a delay time to be taken for the terminal to issue a request for the content and then to reproduce the content increases, so that QoE (Quality of Experience) of an end user deteriorates.

Then, when content is distributed via the mobile network it is a challenge to avoid congestion on the mobile network. An object of the present invention is to provide a content distribution system, a control apparatus, and a content distribution method configured to solve the above-mentioned problems.

SOLUTION TO PROBLEM

According to a first aspect of the present invention, there is provided a content distribution system, comprising, in a mobile network: a plurality of packet forwarding apparatuses that forward a packet; a plurality of cache servers that temporarily hold a content item and transmit the content item through any one of the plurality of packet forwarding apparatuses; and a control apparatus that controls the plurality of cache servers. The control apparatus comprises: an access measurement unit that computes an access frequency for a content item stored in the plurality of cache servers based on a number of accesses to the content item; a content disposition determination unit that determines disposition of content items in the plurality of cache servers, using at least one of a load status of the plurality of cache servers, topology information of the mobile network, in-zone information of a terminal requesting a content item, and the access frequency to instruct the plurality of cache servers to obtain a content item according to the determined disposition; and a cache server selection unit that, upon receipt of a request for a content item from the terminal, instructs a cache server that holds the content item among the plurality of cache servers to transmit the content item.

According to a second aspect of the present invention, there is provided a control apparatus that controls in a mobile network a plurality of cache servers that temporarily hold a content item. The control apparatus comprises: an access measurement unit that computes an access frequency for a content item stored in the plurality of cache servers based on a number of accesses to the content item; a content disposition determination unit that determines disposition of content items in the plurality of cache servers, using at least one of a load status of the plurality of cache servers, topology information of the mobile network, in-zone information of a terminal requesting a content item, and the access frequency to instruct the plurality of cache servers to obtain a content item according to the determined disposition; and a cache server selection unit that, upon receipt of a request for a content item from the terminal, instructs a cache server that holds the content item among the plurality of cache servers to transmit the content item through a packet forwarding apparatus.

According to a third aspect of the present invention, there is provided a content distribution method, comprising: by a control apparatus that controls in a mobile network a plurality of cache servers that temporarily hold a content item, computing an access frequency for a content item stored in the plurality of cache servers based on a number of accesses to the content item; determining disposition of content items in the plurality of cache servers, using at least one of a load status of the plurality of cache servers, topology information of the mobile network, in-zone information of a terminal requesting a content item, and the access frequency; instructing the plurality of cache servers to obtain a content item according to the determined disposition; and upon receipt of a request for a content item from the terminal, instructing a cache server that holds the content item among the plurality of cache servers to transmit the content item through a packet forwarding apparatus.

ADVANTAGEOUS EFFECTS OF INVENTION

According to the content distribution system, the control apparatus, and the content distribution method of the present invention, when the content is distributed via the mobile network, congestion on the mobile network can be avoided.

BRIEF DESCRIPTION OF DRAWINGS

Fig. 1 is a block diagram showing a configuration of a content distribution system according to a first exemplary embodiment.
Fig. 2 is a block diagram showing an example of a control apparatus in the content distribution system according to the first exemplary embodiment.
Fig. 3 is a block diagram showing an example of a cache server in the content distribution system according to the first exemplary embodiment.
Fig. 4 is a block diagram showing a configuration of a content distribution system according to a second exemplary embodiment.
Fig. 5 is a block diagram showing a configuration of a content distribution system according to a third exemplary embodiment.
Fig. 6 is a block diagram showing an example of a control apparatus in the content distribution system according to the third exemplary embodiment.
Fig. 7 is a block diagram showing an example of a cache server in a content distribution system according to a fourth exemplary embodiment.
Fig. 8 is a block diagram showing a configuration of the content distribution system according to the fourth exemplary embodiment.

DESCRIPTION OF EMBODIMENTS

First, an overview of the present invention will be described. A reference sign in each drawing appended to this overview is solely given as an example of help understanding, and does not intend to limit the present invention to the mode that has been illustrated.

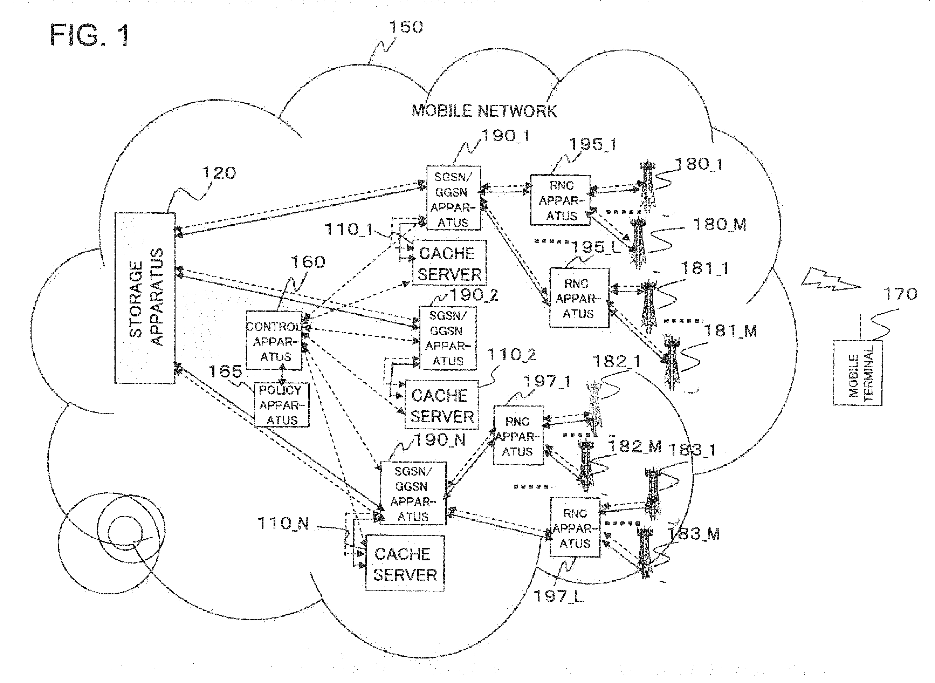

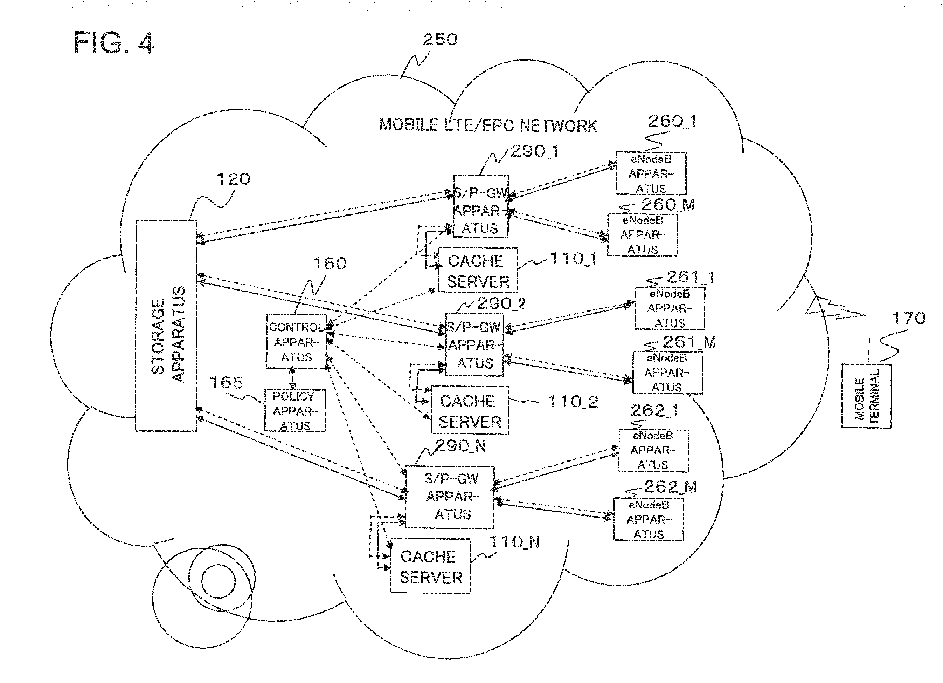

Referring to Figs. 1, 2, and 4, a content distribution system of the present invention comprises, in a mobile network, (150 or 250) a plurality of packet forwarding apparatuses (SGSN/GGSN apparatuses 190_1 to 190_N in Fig. 1 or S/P-GW apparatuses 290_1 to 290_N in Fig. 4) that forward a packet, a storage apparatus (120) that stores a plurality of content items, a plurality of cache servers (110_1 to 110_N) that temporarily hold at least a part of the plurality of content items and transmit the at least a part of the plurality of content items through any one of the plurality of packet forwarding apparatuses (190_1 to 190_N or 290_1 to 290_N), and a control apparatus (160) that controls the plurality of cache servers (110_1 to 110_N). The control apparatus (160) comprises an access measurement unit (184), a content disposition determination unit (185), and a cache server selection unit (187). The access measurement unit (184) computes an access frequency for a content item stored in the plurality of cache servers (110_1 to 110_N) based on a number accesses to the content item. The content disposition determination unit (185) determines disposition of content items in the plurality of cache servers (110_1 to 110_N), using at least two of a load status of the plurality of cache servers (110_1 to 110_N), topology information of the mobile network (150 or 250), in-zone information of a terminal (mobile terminal 170) requesting a content item, and the access frequency to instruct the plurality of cache servers (110_1 to 110_N) to obtain a content item from the storage apparatus (120) and to hold the content item, according to the determined disposition. Upon receipt of a request for a content item from the terminal (170), the cache server selection unit (187) instructs a cache server that holds the content item among the plurality of cache servers (110_1 to 110_N) to transmit the content item.

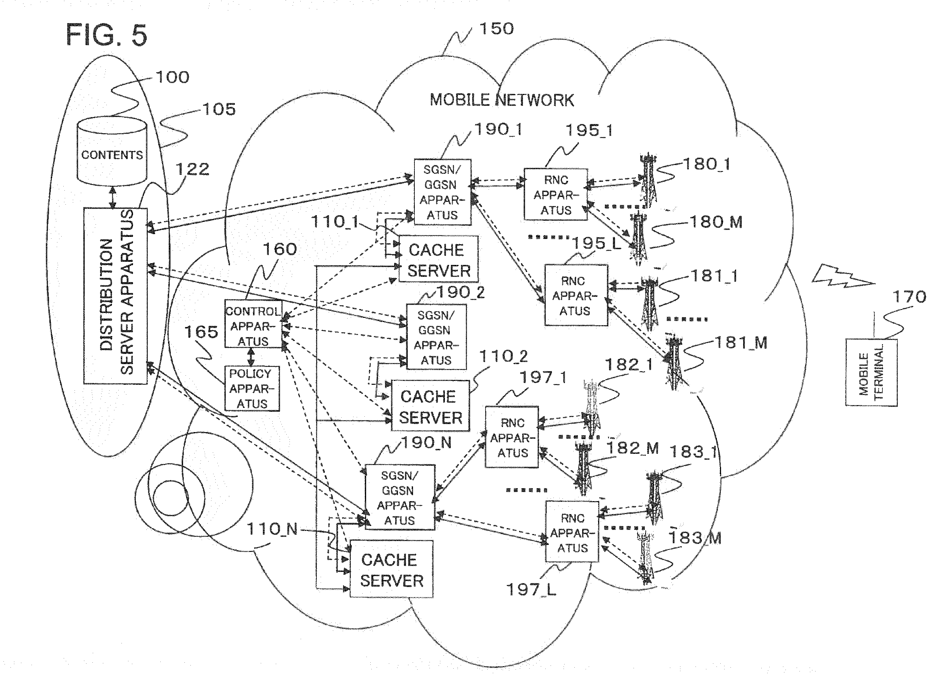

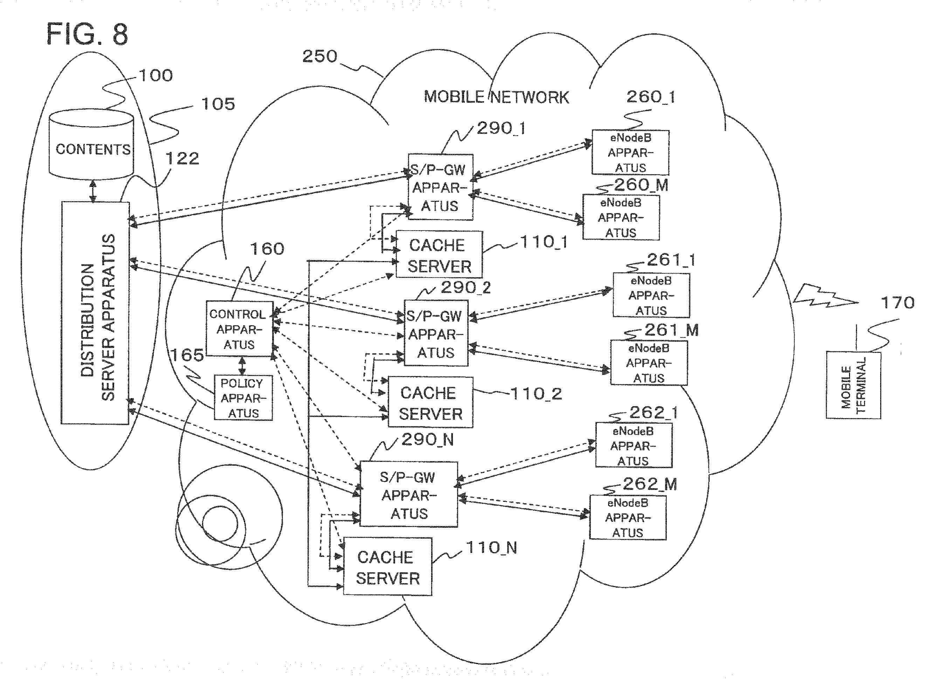

Referring to Figs. 5, 6, and 8, a content distribution system of the present invention comprises in a mobile network (150 or 250): a plurality of packet forwarding apparatuses (SGSN/GGSN apparatuses 190_1 to 190_N in Fig. 5 or S/P-GW apparatuses 290_1 to 290_N in Fig. 8) that forward a packet; a plurality of cache servers (110_1 to 110_N) that temporarily hold a content item and transmit the content item through any one of the plurality of packet forwarding apparatuses (190_1 to 190_N or 290_1 to 290_N); and a control apparatus (160) that controls the plurality of cache servers (110_1 to 110_N). The control apparatus (160) comprises an access measurement unit (184), a content disposition determination unit (185), and a cache server selection unit (187). The access measurement unit (184) computes an access frequency for a content item stored in the plurality of cache servers (110_1 to 110_N) based on a number of accesses to the content item. The content disposition determination unit (185) determines disposition of content items in the plurality of cache servers (110_1 to 110_N), using at least two of a load status of the plurality of cache servers (110_1 to 110_N), topology information of the mobile network (150 or 250), in-zone information of a terminal (mobile terminal 170) requesting a content item, and the access frequency to instruct the plurality of cache servers (110_1 to 110_N) to obtain a content item from another cache server among the plurality of cache servers or a distribution server apparatus (122) on the Internet (105), according to the determined disposition. Upon receipt of a request for a content item from the terminal (170), the cache server selection unit (187) instructs a cache server that holds the content item among the plurality of cache servers (110_1 to 110_N) to transmit the content item.

According to the content distribution system of the present invention, when the content is distributed via the mobile network (150, 250), congestion can be avoided.

The following modes are possible in the present invention.

(Mode 1-1)

A content distribution system comprises, in a mobile network: a plurality of packet forwarding apparatuses that forward a packet; a storage apparatus that stores a plurality of content items; a plurality of cache servers that temporarily hold at least a part of the plurality of content items and transmit the at least a part of the plurality of content items through any one of the plurality of packet forwarding apparatuses; and a control apparatus that controls the plurality of cache servers. The control apparatus comprises: an access measurement unit that computes an access frequency for a content item stored in the plurality of cache servers based on a number of accesses to the content item; a content disposition determination unit that determines disposition of content items in the plurality of cache servers, using at least two of a load status of the plurality of cache servers, topology information of the mobile network, in-zone information of a terminal requesting a content item, and the access frequency to instruct the plurality of cache servers to obtain a content item from the storage apparatus and to hold the content item, according to the determined disposition; and a cache server selection unit that, upon receipt of a request for a content item from the terminal, instructs a cache server that holds the content item among the plurality of cache servers to transmit the content item.

(Mode 1-2)

When Aj is an access frequency for a jth content item, Sj is a size of the jth content item, and Cij a cost function of an ith cache server among the plurality of the cache servers, the content disposition determination unit may dispose content items in a cache server that minimizes $\sum_j Cij*Aj*Sj$.

(Mode 1-3)

The content distribution determination unit may compute the cost function Cij, based on load information on the ith cache server of the plurality of cache servers, the topology information of the mobile network, and the in-zone information of the terminal, or the load information and the topology information.

(Mode 1-4)

The content disposition determination unit may determine disposition of content items for each predetermined time or when a predetermined condition is satisfied

(Mode 1-5)

The access measurement unit may collect the number of accesses to a content item stored in the plurality of cache servers for each predetermined period of time or when a predetermined condition is satisfied.

(Mode 1-6)

The content disposition determination unit may determine disposition of a predetermined portion of content items stored in the storage apparatus in the plurality of cache servers.

(Mode 1-7)

The content disposition determination unit may determine disposition of content items for a predetermined plurality of the plurality of cache servers or a plurality of the plurality of cache servers satisfying a predetermined condition.

(Mode 1-8)

The plurality of packet forwarding apparatuses may be an SGSN (Serving General packet radio service Support Node) apparatus, a GGSN (Gateway General packet radio service Support Node) apparatus, or an SGSN/GGSN apparatus on a mobile packet network, or an S-GW (Serving Gateway) apparatus, a P-GW (Packet data network Gateway) apparatus, or an S/P-GW (Serving/Packet data network Gateway) apparatus on a mobile EPC (Evolved Packet Core) network.

(Mode 1-9)

The content items may include at least one of a moving image, a still image, sound, audio, software, an application, and data.

(Mode 1-10)

A control apparatus that controls in a mobile network a plurality of cache servers that temporarily hold at least a part of a plurality of content items stored in a storage apparatus. The control apparatus comprises: an access measurement unit that computes an access frequency for a content item stored in the plurality of cache servers based on a number of accesses to the content items; a content disposition determination unit that determines disposition of content items in the plurality of cache servers, using at least two of a load status of the plurality of cache servers, topology information of the mobile network, in-zone information of a terminal requesting a content item, and the access frequency to instruct the plurality of cache servers to obtain a content item from the storage apparatus and to hold the content item, according to the determined disposition; and a cache server selection unit that, upon receipt of a request for a content item from the terminal, instruct a cache server that holds the content item among the plurality of cache servers to transmit the content item through a packet forwarding apparatus.

(Mode 1-11)

When Aj is an access frequency for a jth content item, Sj is a size of the jth content item, and Cij is a cost function of an ith cache server among the plurality of the cache servers, the content disposition determination unit may dispose content items in a cache server that minimizes $\sum_j Cij*Aj*Sj$.

(Mode 1-12)

The content distribution determination unit may compute the cost function Cij, based on load information on the ith cache server of the plurality of cache servers, the topology information of the mobile network, and the in-zone information of the terminal, or the load information and the topology information.

(Mode 1-13)

A content distribution method, comprising: by a control apparatus that controls in a mobile network a plurality of cache servers that temporarily hold at least a part of a plurality of content items stored in a storage apparatus, computing an access frequency for a content item stored in the plurality of cache servers based on a number of accesses to the content item; determining disposition of content items in the plurality of cache servers, using at least two of a load status of the plurality of cache servers, topology information of the mobile network, in-zone information of a terminal requesting a content item, and the access frequency; instructing the plurality of cache servers to obtain a content item according to the determined disposition; and upon receipt of a request for a content item from the terminal, instructing a cache server that holds the content item among the plurality of cache servers to transmit the content item through a packet forwarding apparatus.

(Mode 1-14)

When Aj is an access frequency for a jth content item, Sj is a size of the jth content item, and Cij is a cost function of an ith cache server among the plurality of the cache servers, content items may be disposed in a cache server that minimizes $\sum_j Cij*Aj*Sj$.

(Mode 1-15)

The cost function Cij may be computed, based on load information on the ith cache server of the plurality of cache servers, the topology information of the mobile network, and the in-zone information of the terminal, or the load information and the topology information
In the present invention, the following modes are further possible.

(Mode 2-1)

A content distribution system, comprising, in a mobile network: a plurality of packet forwarding apparatuses that forward a packet; a plurality of cache servers that temporarily hold a content item and transmit the content item through any one of the plurality of packet forwarding apparatuses; and a control apparatus that controls the plurality of cache servers. The control apparatus comprises: an access measurement unit that computes an access frequency for a content item stored in the plurality of cache servers based on a number of accesses to the content item; a content disposition determination unit that determines disposition of content items in the plurality of cache servers, using at least one of a load status of the plurality of cache servers, topology information of the mobile network, in-zone information of a terminal requesting a content item, and the access frequency to instruct the plurality of cache servers to obtain a content item from another cache server among the plurality of cache servers or a distribution server apparatus on the Internet, according to the determined disposition; and a cache server selection unit that, upon receipt of a request for a content item from the terminal, instructs a cache server that holds the content item among the plurality of cache servers to transmit the content item.

(Mode 2-2)

When Aj is an access frequency for a jth content item, Sj is a size of the jth content item, and Cij a cost function of an ith cache server among the plurality of the cache servers, the content disposition determination unit may dispose content items in a cache server that minimizes $\sum_j Cij*Aj*Sj$.

(Mode 2-3)

The content distribution determination unit may compute the cost function Cij, based on load information on the ith cache server of the plurality of cache servers, the topology information of the mobile network, and the in-zone information of the terminal, or the load information and the topology information.

(Mode 2-4)

The content disposition determination unit may instruct one of the plurality of cache servers to obtain a content item to be stored in the one of the plurality of cache servers from another cache server among the plurality of cache servers when the content item is held by the other cache server, and otherwise instruct the one of the plurality of cache servers to obtain the content item from a distribution server apparatus on the Internet.

(Mode 2-5)

The content disposition determination unit may determine disposition of content items for each predetermined time or when a predetermined condition is satisfied.

(Mode 2-6)

The access measurement unit may collect the number of accesses to a content item stored in the plurality of cache servers for each predetermined period of time or when a predetermined condition is satisfied.

(Mode 2-7)

The content disposition determination unit may determine disposition of content items for a cache server among the plurality of cache servers with an access frequency of accesses exceeding a predetermined threshold value.

(Mode 2-8)

The plurality of packet forwarding apparatuses may be an SGSN (Serving General packet radio service Support Node) apparatus, a GGSN (Gateway General packet radio service Support Node) apparatus, or an SGSN/GGSN apparatus on a mobile packet network, or an S-GW (Serving Gateway) apparatus, a P-GW (Packet data network Gateway) apparatus, or an S/P-GW (Serving/Packet data network Gateway) apparatus on a mobile EPC (Evolved Packet Core) network.

(Mode 2-9)

The content items may include at least one of a moving image, a still image, sound, audio, software, an application, and data.

(Mode 2-10)

A control apparatus that controls in a mobile network a plurality of cache servers that temporarily hold a content item, the control apparatus comprising: an access measurement unit that computes an access frequency for a content item stored in the plurality of cache servers based on a number of accesses to the content item; a content disposition determination unit that determines disposition of content items in the plurality of cache servers, using at least one of a load status of the plurality of cache servers, topology information of the mobile network, in-zone information of a terminal requesting a content item, and the access frequency to instruct the plurality of cache servers to obtain a content item from another cache server among the plurality of cache servers or a distribution server apparatus on the Internet, according to the determined disposition; and a cache server selection unit that, upon receipt of a request for a content item from the terminal, instructs a cache server that holds the content item among the plurality of cache servers to transmit the content item through a packet forwarding apparatus.

(Mode 2-11)

When Aj is an access frequency for a jth content item, Sj is a size of the jth content item, and Cij is a cost function of an ith cache server among the plurality of the cache servers, the content disposition determination unit may dispose content items in a cache server that minimizes $\sum_j Cij*Aj*Sj$.

(Mode 2-12)

The content distribution determination unit may compute the cost function Cij, based on load information on the ith cache server of the plurality of cache servers, the topology information of the mobile network, and the in-zone information of the terminal, or the load information and the topology information.

(Mode 2-13)

The content disposition determination unit may instruct one of the plurality of cache servers to obtain a content item to be stored in the one of the plurality of cache servers from another cache server among the plurality of cache servers when the content item is held by the other cache server, and otherwise instruct the one of the plurality of cache servers to obtain the content item from a distribution server apparatus on the Internet.

(Mode 2-14)

A content distribution method, comprising: by a control apparatus that controls in a mobile network a plurality of cache servers that temporarily hold a content item, computing an access frequency for a content item stored in the plurality of cache servers based on a number of accesses to the content item; determining disposition of content items in the plurality of cache servers, using at least one of a load status of the plurality of cache servers, topology information of the mobile network, in-zone information of a terminal requesting a content item, and the access frequency; instructing the plurality of cache servers to obtain a content item from another cache server among the plurality of cache servers or a distribution server apparatus on the Internet, according to the determined disposition; and upon receipt of a request for a content item from the terminal, instructing a cache server that holds the content item among the plurality of cache servers to transmit the content item through a packet forwarding apparatus.

(Mode 2-15)

When Aj is an access frequency for a jth content item, Sj is a size of the jth content item, and Cij is a cost function of an ith cache server among the plurality of the cache servers, content items may be disposed in a cache server that minimizes $\sum_j Cij*Aj*Sj$.

(Mode 2-16)

The cost function Cij may be computed, based on load information on the ith cache server of the plurality of cache servers, the topology information of the mobile network, and the in-zone information of the terminal, or the load information and the topology information.

(Mode 2-17)

The content distribution method may comprise: instructing selected one of the plurality of cache servers to obtain a content item to be stored in the one of the plurality of cache servers from another cache server among the plurality of cache servers when the content item is held by the other cache server, and otherwise instructing the one of the plurality of cache servers to obtain the content item from a distribution server apparatus on the Internet.

<First Exemplary Embodiment>

A configuration and operation of a content distribution system according to a first exemplary embodiment will be described with reference to Figs. 1 to 3. In the exemplary embodiment that will be described later, it is assumed that each content is a moving image. However, when the content is a still image, audio, sound, software, an application, data, or the like, the same configuration will be employed.
Fig. 1 is a block diagram showing the configuration of the content distribution system in this exemplary embodiment. In this exemplary embodiment, a 3G mobile packet network is employed as a mobile network 150, and an SGSN/GGSN apparatus is employed as a packet forwarding apparatus.
Referring to Fig. 1, a storage apparatus 120 stores the content to be held by a mobile operator or the content for which the mobile operator has made a distribution contrast with a content provider. Each of these contents will be hereinafter referred to as managed content. It is assumed herein that the managed content is a compression encoded bit stream of the content including at least one kind of a moving image, a still image, audio, sound or the like, or a file that stores the compression encoded bit stream. The managed content may be software, an application, data, or the like.

On the mobile network 150, N units (N ≥ 2) of SGSN/GGSN apparatuses 190_1 to 190_N are disposed. RNC (Radio Network Controller) apparatuses 195_1 to 195_L (L ≥ 2) are connected to the SGSN/GGSN apparatus 190_1. RNC apparatuses 197_1 to 197_L are connected to the SGSN/GGSN apparatus 190_N. Though L units of RNC apparatuses are connected to the SGSN/GGSN apparatus 190_2 as well, illustration of the L units of RNC apparatuses are omitted in Fig. 1 for convenience of space. M units (M ≥ 2) of base station apparatuses are connected per RNC apparatus. M units of base station apparatuses 180_1 to 180_M are connected to the RNC apparatus 195_1, for example.

One unit of cache servers is connected to each SGSN/GGSN apparatus. To take an example, a cache server 110_1 is connected to the SGSN/GGSN apparatus 190_1.

Further, N units of the cache server 110_1 and cache servers 110_2 to 110_N are connected to one control apparatus 160. A part of the N units of the cache servers 110_1 to 110_N may be connected to the control apparatus 160.

A mobile terminal 170 describes the URL (Uniform Resource Locator) of requested content and then issues a connection request message for distribution of the requested content. Then, one of the base station apparatuses in the communication zone of the mobile terminal 170 (one of the base station apparatuses 181_1 to 181_M in the case of Fig. 1) receives the connection request message, and transmits the connection request message to the RNC apparatus (RNC apparatus 195_L in the case of Fig. 1) that manages the base station apparatus.

The RNC apparatus 195_L receives the connection request message from the base station apparatus, and stores the connection request message, the IP (Internet Protocol) address of the storage apparatus, the IP address of the mobile terminal 170, and the like in a payload portion of a GTP-U (GPRS (General Packet Radio Service) Tunneling Protocol for User Plane), and forwards a GTP packet to the SGSN/GGSN apparatus 190_1 that manages the RNC apparatuses 195_1 to 195_L. Herein, the SGSN/GGSN apparatus indicates a configuration where an SGSN (Serving GPRS Support Node) apparatus and a GGSN (Gateway GPRS Support Node) apparatus are integrated with each other.

Next, the SGSN/GGSN apparatus 190_1 receives the GTP packet.

The cache server 110_1 is connected to the SGSN/GGSN apparatus 190_1, while the cache server 110_N is connected to the SGSN/GGSN apparatus 190_N.

The cache servers 110_1 to 110_N and a policy apparatus 165 are connected to the control apparatus 160. The control apparatus 160 receives load status information and access frequency information for each content from each cache server, receives in-zone information of the mobile terminal 170 from the packet forwarding apparatus, receives network topology information from the policy apparatus 165, and determines content disposition in the cache servers, using at least two or more of these information. The control apparatus issues a content disposition instruction to each cache server. Each cache server that has received the content disposition instruction from the control apparatus 160 accesses the storage apparatus 120 through the SGSN/GGSN apparatus for the content for which disposition has been instructed. Then, the cache server stores the content. When the mobile terminal 170 makes a request for the content, the cache server distributes to the mobile terminal 170 the content for which the request has been made.

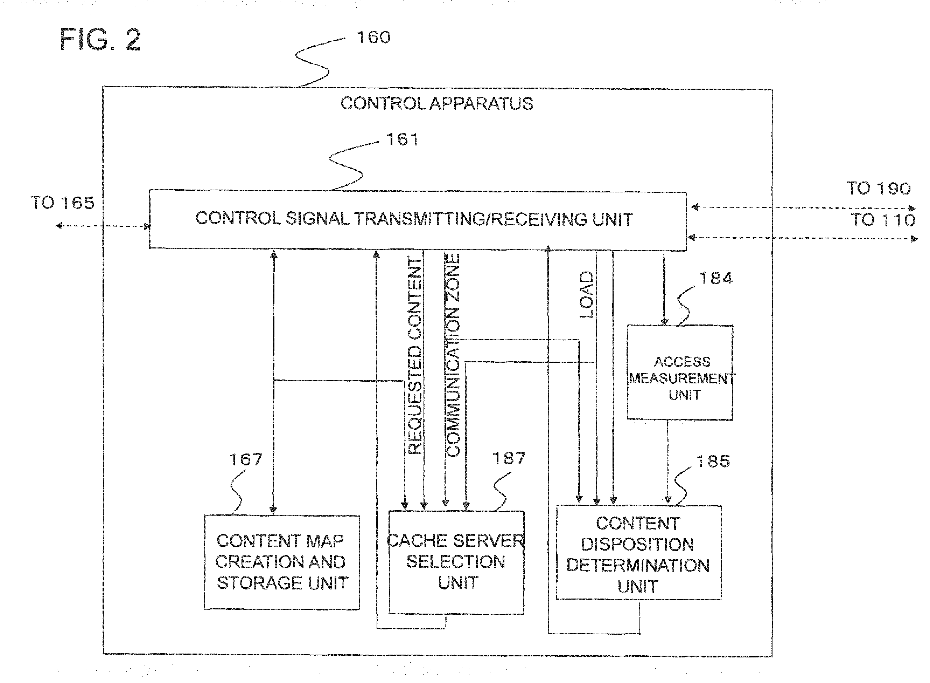

Next, a configuration of the control apparatus 160 will be described with reference to Fig. 2. Fig. 2 is a block diagram showing the configuration of the control apparatus 160 as an example. Referring to Fig. 2, the control apparatus 160 includes a control signal transmitting/receiving unit 161, an access measurement unit 184, a content disposition determination unit 185, a cache server selection unit 187, and a content map creation and storage unit 167.

The control signal transmitting/receiving unit 161 receives the information on the frequency of accesses to each content and the load information on each cache server from each of the cache servers 110_1 to 110_N. The control signal transmitting/receiving unit 161 outputs to the access measurement unit 184 the information on the frequency of accesses to each content, and outputs the load information on each cache server to the content disposition determination unit 185 and the cache server selection unit 187. The control signal transmitting/receiving unit 161 receives information on the cost of each network routing path as the network topology information from the policy apparatus 165, and outputs the information on the cost of each network routing path to the content disposition determination unit 185. Further, the control signal transmitting/receiving unit 161 receives the in-zone information of the mobile terminal 170 from the SGSN/ GGSN apparatus 190_1 (packet forwarding apparatus) or the like, and outputs the in-zone information of the mobile terminal 170 to the content disposition determination unit 185 and the cache server selection unit 187.

The access measurement unit 184 collects the number of times of accesses to each content from each cache server for each predetermined period of time, or when a predetermined condition is satisfied, and performs, for each content, summation of these collected numbers of times of accesses to each content. Then, the access measurement unit 184 aggregates the frequency of accesses for each content for the cache servers as a whole, and then outputs the frequency of accesses for each content for the cache servers as the whole to the content disposition determination unit 185. Herein, as the predetermined condition, a condition where the number of accesses to specific content has exceeded a predetermined threshold value, or a condition other than this condition may be employed.

The content distribution determination unit 185 receives the load information on each server, the network topology information, and the in-zone information of the mobile terminal 170 from the control signal transmitting/receiving unit 161. The content distribution determination unit 185 receives the frequency of accesses for each content from the access measurement unit 184, computes Equation (1) for each of the contents, and then determines the cache server that should hold each content. Further, the content disposition determination unit 185 instructs each cache server associated with the content to procure and store a copy of the content from the storage apparatus 120 through the control signal transmitting/receiving unit 161.

$$Di = \min_i \Sigma_j Cij * Aj * Sj \tag{1}$$

The content disposition determination unit 185 selects a cache server i that minimizes Di in Equation (1). In Equation (1), Di indicates an estimation function of the ith cache server, Cij indicates a cost function of the ith cache server, Aj indicates the frequency of accesses to jth content, and Sj indicates the size of the jth content. $\Sigma_j$ indicates a summation for j. The cost function Cij is computed according to predetermined criteria based on the network topology information, the load information on the ith cache server, and the in-zone information of the mobile terminal 170.

Though three types of the information that are the network topology information, the load information, and the in-zone information are used for Equation (1), two types of the information may be used. Assume that the two types of the information are used. Then when the cost function Cij is computed, criteria constituted from the network information and the load information on each cache server can be employed.

Equation (1) may be computed for only a predetermined portion of the contents rather than all the contents stored in the storage apparatus 120 in order to reduce an amount of computation associated with Equation (1). With respect to the cache servers, only a predetermined plurality of the cache servers may be subject to Equation (1), or only the cache servers each of which satisfies a predetermined condition may be subject to Equation (1). As the predetermined condition, a method of limitation to the contents with P (P ≥ 2) highest ranking frequencies of accesses aggregated by the access measurement unit 184, for example, or the like can be used. Further alternatively, limitation may be imposed on both of the contents and the cache servers.

The content disposition determination unit 185 may perform the computation about content disposition determination using Equation (1) and may instruct to cache a target one of the contents in a target one of the cache servers for each predetermined period of time or when a predetermined condition is satisfied. As the predetermined condition, for example, a condition where the frequency of content accesses aggregated by the access measurement unit 184 has changed from the frequency of content accesses in the past and the rate of change has exceeded a predetermined threshold value. Alternatively, a condition other than this condition may be used.

The cache server selection unit 187 receives the in-zone information of the mobile terminal 170 and the load information on each cache server, and information (such as the URL of the content or the like) on the content requested by the mobile terminal 170 from the control signal transmitting/receiving unit 161 and receives a content map from the content map creation and storage unit 167. The content map herein indicates which content each cache server caches. The cache server selection unit 187 first selects a group of the cache servers that caches the content requested by the mobile terminal 170, and selects the cache server which has a load of a predetermined threshold value or less and is closest to the mobile terminal 170, using the load information and the in-zone information. The cache server selection unit 187 instructs the selected cache server to distribute the content requested by the mobile terminal 170 to the packet forwarding apparatus.

Next, the content map creation and storage unit 167 receives a content list from each of the cache servers 110_1 to 110_N through the control signal transmitting/receiving unit 161 for each predetermined time interval. Then, the content map creation and storage unit 167 generates the content map indicating which content is temporarily stored in which cache server, and then stores the content map.

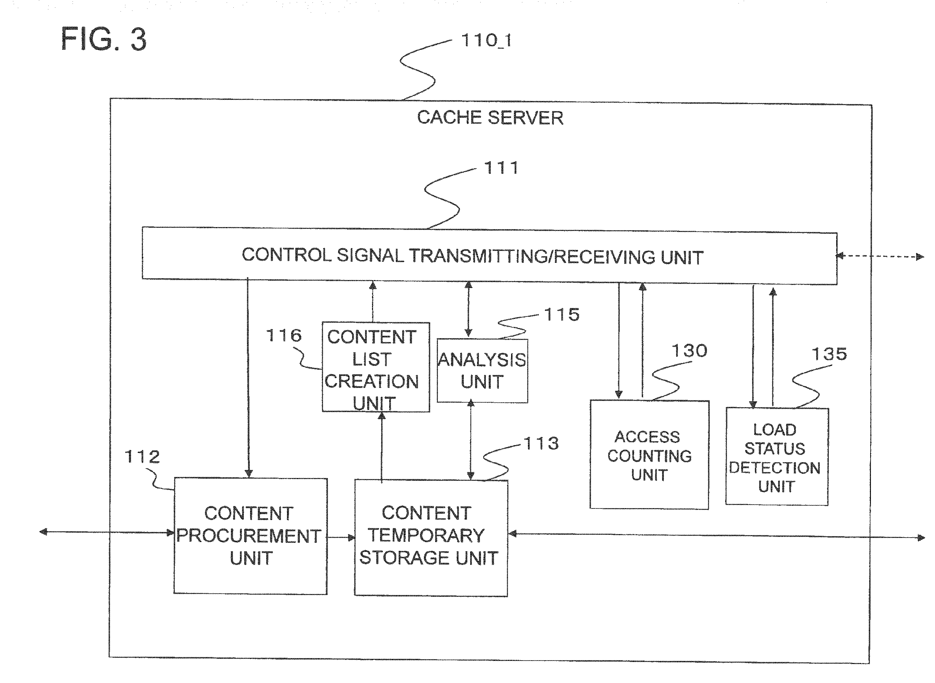

Next, a configuration of the cache server 110_1 connected to the SGSN/GGSN apparatus 190_1 will be described with reference to Fig. 3, as an example of the configuration of the cache server. Since the other cache servers 110_2 to 110_N have the same configuration as the cache server 110_1, description of the configuration of the other cache servers 110_2 to 110_N will be omitted.

Fig. 3 is a block diagram showing the configuration of the cache server 110_1 as the example of the configuration of the cache server. Referring to Fig. 3, the cache server 110_1 includes a control signal transmitting/receiving unit 111, an analysis unit 115, a content procurement unit 112, a content temporary storage unit 113, a content list creation unit 116, an access counting unit 130, and a load status detection unit 135.

The control signal transmitting/receiving unit 111 receives from the SGSN/GGSN apparatus 190_1 the in-zone information of the mobile terminal 170 and the GTP packet that stores the connection request message from the mobile terminal 170, the reception IP address of the mobile terminal 170, the URL of the requested content and the like, and outputs the in-zone information of the mobile terminal 170 and the GTP packet to the analysis unit 115.

The analysis unit 115 reads content of the connection request message stored in the payload portion of the GTP packet, extracts the reception IP address of the mobile terminal 170 and the information on the URL of the requested content or the like, and transmits these information to the control apparatus 160 through the control signal transmitting/ receiving unit 111. Further, the analysis unit 115 transmits the in-zone information of the mobile terminal 170 to the control apparatus 160.

The content procurement unit 112 reads from the storage apparatus 120 the content of which disposition has been specified according to the instruction of content disposition determination transmitted from the content disposition determination unit 185 of the control apparatus 160 shown in Fig. 2 and received through the control signal transmitting/ receiving unit 111, and stores the content in the content temporary storage unit 113.

The content temporary storage unit 113 temporarily sores the content procured and then output by the content procurement unit 112.

The content list creation unit 116 creates the content list of all the contents stored in the content temporary storage unit 113 for each predetermined time interval or when a predetermined condition is satisfied, and transmits the content list to the control apparatus 160 through the control signal transmitting/receiving unit 111.

The access counting unit 130 computes the number of times of accesses for each content by summating the number of connection requests from the mobile terminal 170 within a predetermined time range, for each content stored in the content temporary storage unit 113 by the cache server 110_1, and transmits the number of times of accesses to the control apparatus 160 through the control signal transmitting/receiving unit 111.

The load status detection unit 135 measures a load status Q of the cache server 110_1 for each predetermined period of time or when a predetermined condition is satisfied, and then transmits the measured load status Q to the control apparatus 160 through the control signal transmitting/receiving unit 111. As the predetermined condition, for example, a condition where a request for transmitting the load status has been made to the cache server from the control apparatus 160 may be used, or a condition other than this condition may be used.

The load status detection unit 135 may compute the load status Q according to Equation (2) or may use criteria other than this Equation (2).

$$Q = \Sigma_j A_j * S_j \qquad\qquad (2)$$

In Equation (2), Q indicates an indicator showing the load status of the cache server, $S_j$ indicates the size of a jth one of the contents temporarily stored in the cache server, $A_j$ indicates the number of times of requests for the jth content. The load status detection unit 135 can also use an equation other than Equation (2) for computing the load status.

Referring to Fig. 1, the control apparatus 160 receives the topology of the mobile network and the cost of each network routing path from the policy apparatus 165. When these information do not change during operation of the content distribution system and are predetermined fixed information, the control apparatus 160 may hold these information as a table.

The content disposition determination unit 185 may determine content disposition using an equation other than Equation (1).

Further, the cache servers may be mutually connected, and the content may be interchanged between the cache servers. When the mobile terminal 170 is connected to the cache server 110_1 and then when the requested content is not cached in the cache server 110_1, for example, an inquiry to the control apparatus 160 may be made. Then, the control apparatus 160 may issue an instruction to the cache server 110_1 1 so that the content is read from the cache server in the vicinity of the cache server 110_1 such as the cache server 110_2 or the cache server 110_N instead of being read from the storage apparatus 120.

Referring to Fig. 1, one cache server is connected to one SGSN/GGSN apparatus. It may be so configured that one cache server is connected to a plurality of the SGSN/GGSN apparatuses. Alternatively, a plurality of the cache servers may be connected to one SGSN/GGSN apparatus.

The storage apparatus 120 may be connected to the cache servers 110_1 to 110_N.

Further, referring to Fig. 1, the SGSN/GGSN apparatus is used in which the SGSN apparatus and the GGSN apparatus are integrated with each other. However, a configuration may also be used in which the SGSN apparatus and the GGSN apparatus are separated. In the case of this configuration, at least on cache server may be connected to one of the SGSN apparatus and the GGSN apparatus.

The mobile terminal 170 may be a cellular phone, a smart phone, or a PC including a data communication card, if the mobile terminal 170 is a terminal that can perform communication in a mobile 3G network.

<Second Exemplary Embodiment>

A configuration and operation of a content distribution system according to a second exemplary embodiment will be described with reference to Fig. 4. Fig. 4 is a block diagram showing the configuration of the content distribution system in this exemplary embodiment, as an example. Referring to Fig. 4, each component provided with a same reference numeral as that in Fig. 1 performs the same operation as that in Fig. 1. Thus, description of the component provided with the same reference numeral as that in Fig. 1 will be omitted.

Referring to Fig. 4, an LTE (Long Term Evolution)/EPC (Evolved Packet Core) network, which is a 3.9G mobile network, is used as a mobile network 250, instead of a 3G network in this exemplary embodiment. In the LTE network, functions of a base station apparatus and an RNC apparatus are unified into a single component and are replaced by an eNodeB (evolved Node B) apparatus.

Further, in the EPC, an S/P-GW (Serving/Packet data network-Gateway) apparatus is connected to the eNodeB apparatus. The S/P-GW apparatus herein means a configuration in which an S-GW apparatus and a P-GW apparatus are integrated with each other. Referring to Fig. 4, M units of the eNodeB apparatuses are connected to one unit of the S/P-GW apparatus. To take an example, eNodeB apparatuses 260_1 to 260_M are connected to an S/P-GW apparatus 290_1.

Herein, one cache server is connected to each S/P-GW apparatus. To take an example, a cache server 110_1 is connected to the S/P-GW apparatus 290_1.

A mobile terminal 170 describes the IP address of a storage apparatus 120 and issues a connection request message for distribution. Then, the eNodeB apparatus (one of the eNodeB apparatuses 261_1 to 261_M in the case of Fig. 4) in the communication zone of the mobile terminal 170 receives the connection request message. One of the eNodeB apparatuses 261_1 to 261_M stores the connection request message, the IP address of the storage apparatus 120, the IP address of the mobile terminal 170, and the like in a payload portion of a GTP protocol, and forwards a GTP packet to the S/P-GW apparatus 290_2.

The cache server 110_1 has the same configuration as the configuration shown in Fig. 3. However, in this exemplary embodiment, the connection destination of a control signal transmitting/receiving unit 111 is the S/P-GW apparatus 290_1. Accordingly, the control signal transmitting/receiving unit 111 receives from the S/P-GW apparatus 290_1 the GTP packet with the connection request message from the mobile terminal 170, the IP addresses, and the like stored therein and location information of the mobile terminal 170. Each of other cache servers 110_2 to 110_N performs the above-mentioned communication with the S/P-GW apparatus connected to each of the other cache servers 110_2 to 110_N.

In this exemplary embodiment, the storage apparatus 120 is connected to the S/P-GW apparatuses 290_1 to 290_N.

The control apparatus 160 receives the topology of the mobile network 250 and the cost of each network routing path from a policy apparatus 165. However, when these information do not change during operation of the content distribution system and are predetermined fixed information, the control apparatus 160 may hold these information as a table.

The content distribution determination unit 185 may determine content disposition using an equation other than Equation (1).

Alternatively, the cache servers may be mutually connected, and content may be interchanged between the cache servers. When the mobile terminal 170 is connected to the cache server 110_1 and then when requested content is not cached in the cache server 110_1, for example, an inquiry may be made to the control apparatus 160. Then, the control apparatus 160 may issue an instruction to the cache server 110_1 so that the content is read from the cache server in the vicinity of the cache server 110_1 such as the cache server 110_2 or the cache server 110_N instead of being read from the storage apparatus 120.

Referring to Fig. 4, one cache server is connected to one S/P-GW apparatus. It may be so configured that one cache server is connected to a plurality of the S/P-GW apparatuses. Alternatively, a plurality of the cache servers may be connected to one S/P-GW apparatus.

The storage apparatus 120 may be connected to the cache servers 110_1 to 110_N.

Further, referring to Fig. 4, the S/P-GW apparatus is used in which the S-GW apparatus and the P-GW apparatus are integrated with each other. However, a configuration may be used in which the S-GW apparatus and the P-GW apparatus are separated. In this case, at least one cache server may be connected to one of the S-GW apparatus and the P-GW apparatus.

The mobile terminal 170 may be a cellular phone, a smart phone, or a PC including a data communication card, if the mobile terminal 170 is a terminal that can perform communication in the 3.9G mobile network.

According to the content distribution system in each of the first and second exemplary embodiments, the following effects are brought about. Firstly, the control apparatus determines content disposition in the cache servers, using at least two or more of the information from among the load status information, the access frequency information, the network information, and the in-zone information of the terminal, and instructs each of the cache servers to cache the content of which disposition has been determined. With this arrangement, even if accesses to a popular one of the contents are concentrated, traffic on the mobile network can be distributed, so that load concentration on the network can be avoided. Congestion on the mobile network can be thereby avoided. In this case, even if the number of units of the terminals has increased or the capacity of the content has increased, no delay or no packet loss will occur, so that a problem such as freezing of an image or interruption of sound will not occur. Further, by performing content disposition determination for a predetermined portion of the managed contents, or for a predetermined plurality of the cache servers or a plurality of the cache servers each of which satisfies a predetermined condition when content disposition in the cache servers is determined by the content disposition determination unit of the control apparatus, the amount of processing necessary for the content disposition determination can also be reduced.

Secondly, by distributing the content requested by the terminal from one of the cache servers, a delay time to be taken until the content arrives at the terminal can be shortened. QoE (Quality of Experience) of an end user can be thereby improved.

Thirdly, there is no need for remodeling the terminal at all in order to bring about the first effect and the second effect.

<Third Exemplary Embodiment>

A configuration and operation of a content distribution system according to a third exemplary embodiment will be described with reference to Figs. 5 to 7. In the following exemplary embodiment, it is assumed that each content is a moving image. However, also when the content is a still image, audio, sound, software, an application, data, or the like, the same configuration will be employed.

Fig. 5 is a block diagram showing the configuration of the content distribution system in this exemplary embodiment, as an example. In this exemplary embodiment, a 3G mobile packet network is employed as a mobile network 150, and an SGSN/GGSN apparatus is used as a packet forwarding apparatus.

Referring to Fig. 5, a distribution server apparatus 122 on an internet 105 holds contents 100 and distributes one of the contents according to a request. Herein, it is assumed that each content is a compression encoded bit stream of the content including at least one kind of a moving image, a still image, audio, sound or the like, or a file that stores the compression encoded bit stream. The content may be software, an application, data, or the like.

On the mobile network 150, N units ($N \geq 2$) of SGSN/GGSN apparatuses 190_1 to 190_N are disposed. RNC (Radio Network Controller) apparatuses 195_1 to 195_L ($L \geq 2$) are connected to the SGSN/GGSN apparatus 190_1. RNC apparatuses 197_1 to 197_L are connected to the SGSN/GGSN apparatus 190_N. Though L units of RNC apparatuses are connected to the SGSN/GGSN apparatus 190_2 as well, illustration of the L units of RNC apparatuses is omitted in Fig. 5 for convenience of space. M units ($M \geq 2$) of base station apparatuses are connected per RNC apparatus. M units of base station apparatuses 180_1 to 180_M are connected to the RNC apparatus 195_1, for example.

One unit of cache servers is connected to each SGSN/GGSN apparatus. To take an example, a cache server 110_1 is connected to the SGSN/GGSN apparatus 190_1.

Further, N units of the cache server 110_1 and cache servers 110_2 to 110_N are connected to one control apparatus 160. A part of the N units of the cache servers 110_1 to 110_N may be connected to the control apparatus 160.

A mobile terminal 170 describes the URL (Uniform Resource Locator) of a requested one of the contents on the Internet and issues a connection request message. Then, the base station apparatus (one of the base station apparatuses 181_1 to 181_M in the case of Fig. 5) in the communication zone of the mobile terminal 170 receives the connection request message, and transmits the connection request message to the RNC apparatus (RNC apparatus 195_L in the case of Fig. 5) that manages the base station apparatus.

The RNC apparatus 195_L receives the connection request message from the base station apparatus, and stores the connection request message, the URL of the distribution server apparatus 122, the IP address of the mobile terminal 170, and the like in a payload portion of a GTP protocol, and forwards a GTP packet to the SGSN/GGSN apparatus 190_1 that manages the RNC apparatuses 195_1 to 195_L. Herein, the SGSN/GGSN apparatus means a configuration where an SGSN apparatus and a GGSN apparatus are integrated with each other.

Next, the SGSN/GGSN apparatus 190_1 receives the GTP packet.

The cache server 110_1 is connected to the SGSN/GGSN apparatus 190_1, while the cache server 110_N is connected to the SGSN/GGSN apparatus 190_N. The respective cache servers are mutually connected.

The cache servers 110_1 to 110_N and a policy apparatus 165 are connected to the control apparatus 160. The control apparatus 160 receives, from each cache server, cache server load status information and access frequency information for each content to be cached, receives from the packet forwarding apparatus in-zone information of the mobile terminal 170, receives network topology information from the policy apparatus 165, and determines disposition of each content which is to be cached and satisfies a predetermined condition in the cache server, using two or more of these information. The control apparatus issues to each cache server an instruction of disposing the content of which the disposition has been determined. Each cache server that has received the content disposition instruction from the control apparatus 160 reads the content corresponding to the content disposition instruction, from the cache server in the vicinity of the cache server that has received the content disposition instruction, and stores the read content. When the cache server in the vicinity of the cache server that has received the content disposition instruction does not cache the corresponding content, the cache server that has received the content disposition instruction reads and caches the corresponding content from the distribution server apparatus 122 on the Internet 105. When the mobile terminal 170 makes a request for the content, the cache server distributes the content for which the request has been made to the mobile terminal 170.

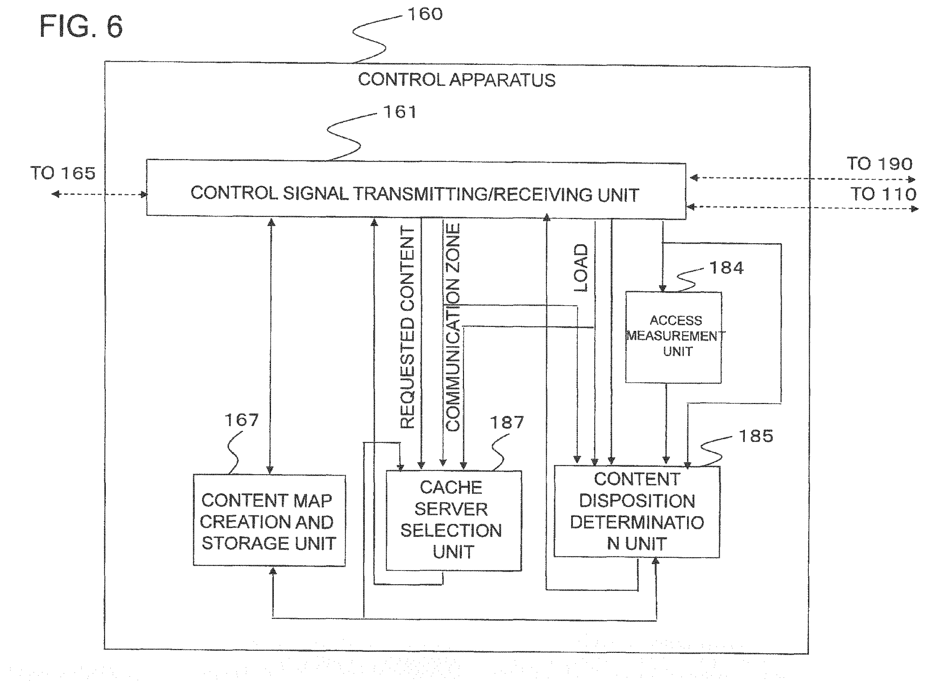

Next, a configuration of the control apparatus 160 will be described with reference to Fig. 6. Fig. 6 is a block diagram showing the configuration of the control apparatus 160 as an example. Referring to Fig. 6, the control apparatus 160 includes a control signal transmitting/receiving unit 161, an access measurement unit 184, a content disposition determination unit 185, a cache server selection unit 187, and a content map creation and storage unit 167.

The control signal transmitting/receiving unit 161 receives the information on the frequency of accesses to each content to be cashed and the load information of each cache server from each of the cache servers 110_1 to 110_N. The control signal transmitting/receiving unit 161 outputs to the access measurement unit 184 the information on the frequency of accesses to each content, and outputs the load information of each cache server to the content disposition determination unit 185 and the cache server selection unit 187. The control signal transmitting/receiving unit 161 receives from the policy apparatus 165 cost information of each network routing path and the like as the network topology information, and outputs the network topology information to the content disposition determination unit 185. Further, the control signal transmitting/receiving unit 161 receives from the packet forwarding apparatus 190_1 or the like the in-zone information of the mobile terminal 170, and outputs the in-zone information of the mobile terminal 170 to the content disposition determination unit 185 and the cache server selection unit 187.

The access measurement unit 184 collects from each cache server the number of times of accesses to each content to be cached for each predetermined period of time, or when a predetermined condition is satisfied, and performs summation of these numbers of times of accesses, for each content. Then, the access measurement unit 184 aggregates the frequency of accesses for each content for the cache servers as a whole, and then outputs the frequency of accesses for each content for the cache servers as the whole to the content disposition determination unit 185. Herein, as the predetermined condition, a condition where the number of accesses to specific content has exceeded a predetermined threshold value, or a condition other than this condition may be employed.

The content distribution determination unit 185 receives from the control signal transmitting/receiving unit 161 the load information of each cache server, the network topology information, and the in-zone information of the mobile terminal 170. The content distribution determination unit 185 receives from the access measurement unit 184 the frequency of accesses for each content to be cached, computes Equation (1) for each content to be cached that satisfies the predetermined condition, and then determines the cache server that should hold each content. Herein, as the predetermined condition, the condition where the number of times of accesses to each content received from the access measurement unit 184 has exceeded a predetermined threshold value, or a condition other than this condition may be used.

$$Di = \min_i \Sigma_j Cij * Aj * Sj \qquad (1)$$

The content disposition determination unit 185 selects a cache server i that minimizes Di in Equation (1). In Equation (1), Di indicates an estimation function of the ith cache server, Cij indicates a cost function of the ith cache server, Aj indicates the frequency of accesses to jth content, and Sj indicates the size of the jth content. $\Sigma_j$ indicates a summation for j. The cost function Cij is computed according to predetermined criteria based on the network topology, the load information of the ith cache server, and the in-zone information of the mobile terminal 170.

Though three types of the information that are the network topology information, the load information, and the in-zone information are used for Equation (1), two types of the information may be used. Assume that the two types of the information are used. Then, when the cost function Cij is computed, criteria constituted from the network information and the load information of each cache server can be employed.

The content disposition determination unit 185 may compute Equation (1) for only the cache server having the high number of times of accesses instead of computing Equation (1) of all the cache servers, by checking the number of times of accesses for each cache server received from the control signal transmitting/receiving unit 161.

The content disposition determination unit 185 may perform the computation about content disposition determination using Equation (1) and may instruct to cache target content in a target one of the cache servers for each predetermined period of time or when a predetermined condition is satisfied. As the predetermined condition, for example, a condition where the frequency of content accesses aggregated by the access measurement unit 184 has changed from the frequency of content accesses in the past and the rate of change has exceeded a predetermined threshold value. Alternatively, a condition other than this condition may be used.

Next, the content disposition determination unit 185 makes an inquiry to the content map creation and storage unit 167 to receive the IP address of the cache server in the vicinity which caches the content of which disposition has been determined. Then, the content disposition determination unit 185 transmits, to the cache server determined to cache the content, the IP address, the URL or content identification information of the content, and an instruction of caching a replica of the content from the cache server having the IP address in the vicinity of the cache server determined to cache the content, through the control signal transmitting/receiving unit 161. When it is found as a result of the inquiry to the content map creation and storage unit 167 that none of the cache servers in the vicinity of the cache server determined to cache the content cache the content, the content disposition determination unit 185 transmits the IP address of the distribution server apparatus 122 on the Internet 105 and an instruction of caching a replica of the content from the distribution server apparatus 122 to the cache server determined to cache the content, through the control signal transmitting/receiving unit 161.

The cache server selection unit 187 receives the in-zone information of the mobile terminal 170, the load information of each cache server, and the information on the content (such as the URL or the content identification information of the content) requested by the mobile terminal 170, and receives a content map from the content map creation and storage unit 167. The content map is a map indicating which content each cache server caches. The cache server selection unit 187 first selects a group of the cache servers that caches the content requested by the mobile terminal 170, and selects the cache server which has a load of a predetermined threshold value or less and is closest to the mobile terminal 170, using the load information and the in-zone information. The cache server selection unit 187 instructs the selected cache server to distribute the content requested by the mobile terminal 170 to the packet forwarding apparatus, through the control signal transmitting/receiving unit 161.

The content map creation and storage unit 167 receives a content list from each of the cache servers 110_1 to 110_N through the control signal transmitting/receiving unit 161 for each predetermined time interval. Then, the content map creation and storage unit 167 creates the content map indicating which content is temporarily stored in which cache server, and then stores the content map.

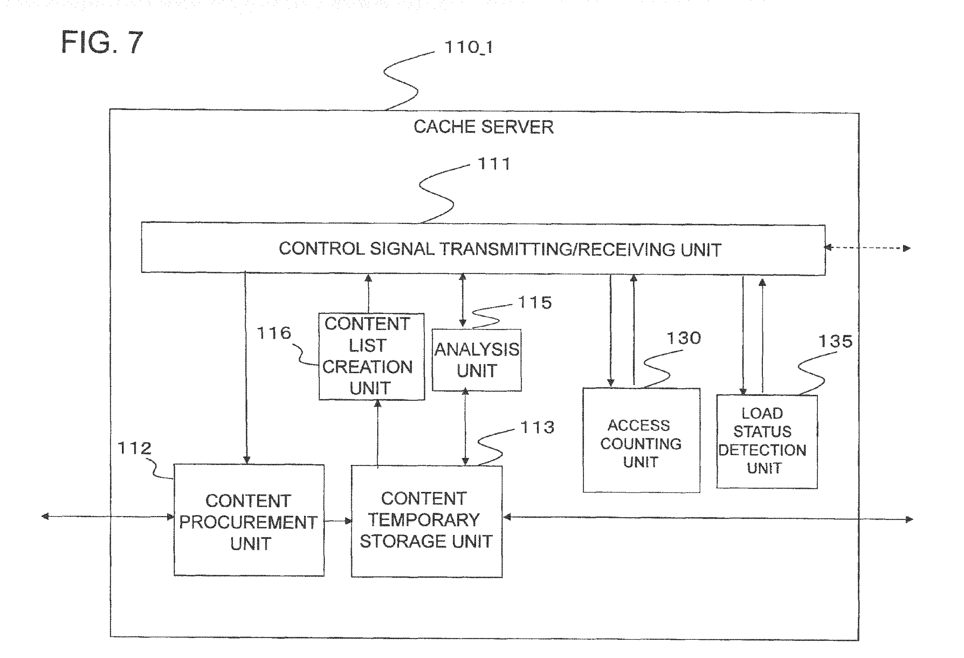

Next, a configuration of the cache server 110_1 connected to the SGSN/GGSN apparatus 190_1 will be described with reference to Fig. 7, as a typical configuration of the cache server. Since the other cache servers 110_2 to 110_N have the same configuration as the cache server 110_1, description of the configuration of the other cache servers 110_2 to 110_N will be omitted.

Fig. 7 is a block diagram showing the configuration of the cache server 110_1 as the example of the configuration of the cache server. Referring to Fig. 7, the cache server 110_1 includes a control signal transmitting/receiving unit 111, an analysis unit 115, a content procurement unit 112, a content temporary storage unit 113, a content list creation unit 116, an access counting unit 130, and a load status detection unit 135.

The control signal transmitting/receiving unit 111 receives from the SGSN/GGSN apparatus 190_1 the in-zone information of the mobile terminal 170 and the GTP packet that stores the connection request message from the mobile terminal 170, the reception IP address of the mobile terminal 170, the URL of the requested content and the like, and outputs the in-zone information of the mobile terminal 170 and the GTP packet to the analysis unit 115.

The analysis unit 115 reads content of the connection request message stored in the payload portion of the GTP packet, extracts the reception IP address of the mobile terminal 170 and information on the URL of the requested content or the like, and transmits these information to the control apparatus 160 through the control signal transmitting/receiving unit 111. Further, the analysis unit 115 transmits the in-zone information of the mobile terminal 170 to the control apparatus 160.

According to the instruction of content disposition determination transmitted from the content disposition determination unit 185 of the control apparatus 160 shown in Fig. 6 and received through the control signal transmitting/receiving unit 111, the content procurement unit 112 reads the content of which disposition has been specified, from the cache server in the vicinity of the cache server 110_1 and having the IP address that has been instructed by the control apparatus 160 or the distribution server apparatus 122 on the Internet 105, and outputs the content to the content temporary storage unit 113.

The content temporary storage unit 113 temporarily sores the content output by the content procurement unit 112.

The content list creation unit 116 creates the content list of all the contents stored in the content temporary storage unit 113 for each predetermined time interval or when a predetermined condition is satisfied, and transmits the content list to the control apparatus 160 through the control signal transmitting/receiving unit 111.

The access counting unit 130 computes the number of times of accesses for each content by summating the number of connection requests from the mobile terminal 170 within a predetermined time range, for each content stored in the content temporary storage unit 113 by the cache server 110_1, and transmits the number of times of accesses to the control apparatus 160 through the control signal transmitting/receiving unit 111.

The load status detection unit 135 measures a load status Q of the cache server 110_1 for each predetermined time or when a predetermined condition is satisfied. Then, the load status detection unit 135 transmits the measured load status Q to the control apparatus 160 through the control signal transmitting/receiving unit 111. Herein, as the predetermined condition, a condition where the control apparatus 160 has requested transmission of the load status to the cache server, for example. Alternatively, a condition other than this condition may be used.

The load status detection unit 135 may compute the load status Q according to Equation (2), for example.

$$Q = \Sigma_j A j * S j \qquad\qquad (2)$$

In equation (2), Q indicates an indicator showing the load status of the cache server, Sj indicates the size of a jth one of the contents temporarily stored by the cache server, Aj indicates the number of times of requests for the jth content. The load status detection unit 135 can use an equation other than Equation (2) for computing the load status.

Referring to Fig. 5, the control apparatus 160 receives the topology from the policy apparatus 165 as network information of the mobile network 150. However, when these information do not change during operation of the content distribution system and are predetermined fixed information, the control apparatus 160 may hold these information as a table.

The content disposition determination unit 185 may determine content disposition using an equation other than Equation (1).

Referring to Fig. 5, one cache server is connected to one SGSN/GGSN apparatus. It may be so configured that one cache server is connected to a plurality of the SGSN/GGSN apparatuses. Alternatively, a plurality of the cache servers may be connected to one SGSN/GGSN apparatus.

The distribution server apparatus 122 may be connected to the cache servers 110_1 to 110_N.

Further, referring to Fig. 5, the SGSN/GGSN apparatus is used in which the SGSN apparatus and the GGSN apparatus are integrated with each other. However, a configuration may also be used in which the SGSN apparatus and the GGSN apparatus are separated. In the case of this configuration, at least on cache server may be connected to one of the SGSN apparatus and the GGSN apparatus.

The mobile terminal 170 may be a cellular phone, a smart phone, or a PC including a data communication card, if the mobile terminal 170 is a terminal that can perform communication in a mobile 3G network.

<Fourth Exemplary Embodiment>

A configuration and operation of a content distribution system according to a fourth exemplary embodiment will be described with reference to Fig. 8. Fig. 8 is a block diagram showing the configuration of the content distribution system in this exemplary embodiment, as an example. Referring to Fig. 8, each component provided with a same reference numeral as that in Fig. 5 performs the same operation as that in Fig. 5. Thus, description of the component provided with the same reference numeral as that in Fig. 1 will be omitted.

Referring to Fig. 8, an LTE (Long Term Evolution)/EPC (Evolved packet Core) network, which is a 3.9G mobile network, is used in this exemplary embodiment, as a mobile network 250 instead of a 3G network. In the LTE, functions of a base station apparatus and an RNC apparatus are unified into a single component and are replaced by an eNodeB (evolved Node B) apparatus.

Further, in the EPC, an S/P-GW (Serving/Packet Data-Gateway) apparatus is connected to the eNodeB apparatus. The S/P-GW apparatus herein means a configuration in which an S-GW apparatus and a P-GW apparatus are integrated with each other. Referring to Fig. 8, M units of the eNodeB apparatuses are connected to one unit of the S/P-GW apparatus. To take an example, eNodeB apparatuses 260_1 to 260_M are connected to an S/P-GW apparatus 290_1.

Herein, one cache server is connected to each S/P-GW apparatus. To take an example, a cache server 110_1 is connected to the S/P-GW apparatus 290_1.

A mobile terminal 170 describes the IP address of a distribution server apparatus 120 and issues a connection request message for distribution. Then, the eNodeB apparatus (one of the eNodeB apparatuses 261_1 to 261_M in the case of Fig. 8) in the communication zone of a mobile terminal 170 receives the connection request message. One of the eNodeB apparatuses 261_1 to 261_M stores the connection request message, the IP address of the distribution server apparatus 122, the IP address of the mobile terminal 170, and the like in a payload portion of a GTP protocol, and forwards a GTP packet to the S/P-GW apparatus 290_2.

The cache server 110_1 has the same configuration as the configuration shown in Fig. 7. However, in this exemplary embodiment, the connection destination of a control signal transmitting/receiving unit 111 is the S/P-GW apparatus 290_1. Accordingly, the control signal transmitting/receiving unit 111 receives from the S/P-GW apparatus 290_1 location information of the mobile terminal 170 and the GTP packet with the connection request message from the mobile terminal 170, the IP addresses, and the like stored therein. Each of other cache servers 110_2 to 110_N performs the above-mentioned communication with the S/P-GW apparatus connected to each of the other cache servers 110_2 to 110_N.

In this exemplary embodiment, the distribution server apparatus 122 is connected to the S/P-GW apparatuses 290_1 to 290_N.

The control apparatus 160 receives the topology of the mobile network 250 from a policy apparatus 165, as network information of the mobile network 250. However, when these information do not change during operation of the content distribution system and are predetermined fixed information, the control apparatus 160 may hold these information as a table.

The content distribution determination unit 185 may determine content disposition using an equation other than Equation (1).

Referring to Fig. 8, one cache server is connected to one S/P-GW apparatus. It may be so configured that one cache server is connected to a plurality of the S/P-GW apparatuses. Alternatively, a plurality of the cache servers may be connected to one S/P-GW apparatuses.

The distribution server apparatus 122 may be connected to the cache servers 110_1 to 110_N.

Referring to Fig. 8, the S/P-GW apparatus is used in which the S-GW apparatus and the P-GW apparatus are integrated with each other. However, a configuration may be used in which the S-GW apparatus and the P-GW apparatus are separated. In this case, at least one cache server may be connected to one of the S-GW apparatus and the P-GW apparatus.

The mobile terminal 170 may be a cellular phone, a smart phone, or a PC including a data communication card, if the mobile terminal 170 is a terminal that can perform communication in a mobile 3.9G network.

According to the content distribution system in each of the third and fourth exemplary embodiment, the following effects are brought about. As a first effect, even if accesses to a popular one of the contents on the Internet from the terminal are concentrated, the control apparatus determines content disposition in the cache servers, using at least two or more of the information from among the load status information, the access frequency information, the network information, and the in-zone information of the terminal, and instructs each cache server to cache the content of which disposition has been determined. With this arrangement, even if the accesses to a popular one of the contents are concentrated, traffic on the mobile network can be distributed, so that network load concentration can be avoided. Congestion on the network can be thereby avoided. In this case, even if the number of units of the terminals has increased or the capacity of the content has increased, no delay or no packet loss will occur, so that a problem such as freezing of an image or interruption of sound will not occur. Further, by performing content disposition determination for a predetermined portion of the contents to be cached, or for one or more of the cache servers each having the frequency of accesses exceeding a predetermined threshold value when content disposition in the cache servers is determined by the content disposition determination unit of the control apparatus, the amount of processing necessary for the content disposition determination can be reduced.

As a second effect, by distributing the content requested by the terminal from one of the cache servers, a delay time until the content arrives at the terminal can be shortened. QoE (Quality of Experience) of an end user can be thereby improved.

Thirdly, there is no need for remodeling the terminal at all in order to bring about the first effect and the second effect.

Each disclosure of the above-mentioned related art documents such as Patent Literature is incorporated herein by reference. Modification and adjustment of each exemplary embodiment are possible within the scope of the overall disclosure (including the claims) of the present invention and based on the technical concept of the present invention. Various combinations and selections of various disclosed elements (including each element in each claim, each element in each exemplary embodiment and each example, and each element in each drawing) are possible within the scope of the claims of the present invention. That is, the present invention naturally includes various variations and modifications that could be made by those skilled in the art according to the overall disclosure including the claims and the technical concept.

REFERENCE SIGNS LIST

| | |
|---|---|
| 100 | content |
| 105 | Internet |
| 110_1 ~ 110_N | cache server |
| 111 | control signal transmitting/receiving unit |
| 112 | content procurement unit |
| 113 | content temporary storage unit |
| 115 | analysis unit |
| 116 | content list creation unit |

| 120 | storage apparatus |
| 122 | distribution server apparatus |
| 130 | access counting unit |
| 135 | load status detection unit |
| 150 | mobile network |
| 160 | control apparatus |
| 161 | control signal transmitting/receiving unit |
| 165 | policy apparatus |
| 167 | content map creation and storage unit |
| 170 | mobile terminal |
| 180_1 ~ 180_M, 181_1 ~ 181_M, 182_1 ~ 182_M, 183_1 ~ 183_M | base station apparatus |
| 184 | access measurement unit |
| 185 | content disposition determination unit |
| 187 | cache server selection unit |
| 190_1 to 190_N | SGSN/GGSN apparatus |
| 195_1 ~ 195_L, 197_1 ~ 197_L | RNC apparatus |
| 250 | mobile network |
| 260-1 ~ 260-M 261_1 ~ 261_M, 262_1 ~ 262_M | eNodeB apparatus |
| 290_1 ~ 290_N | S/P-GW apparatus |

**Claims**

1. A content distribution system, comprising, in a mobile network:

   a plurality of packet forwarding apparatuses that forward a packet;
   a plurality of cache servers that temporarily hold a content item and transmit the content item through any one of the plurality of packet forwarding apparatuses; and
   a control apparatus that controls the plurality of cache servers, wherein
   the control apparatus comprises:

   an access measurement unit that computes an access frequency for a content item stored in the plurality of cache servers based on a number of accesses to the content item;
   a content disposition determination unit that determines disposition of content items in the plurality of cache servers, using at least one of a load status of the plurality of cache servers, topology information of the mobile network, in-zone information of a terminal requesting a content item, and the access frequency to instruct the plurality of cache servers to obtain a content item according to the determined disposition; and
   a cache server selection unit that, upon receipt of a request for a content item from the terminal, instructs a cache server that holds the content item among the plurality of cache servers to transmit the content item.

2. The content distribution system according to claim 1, wherein
   when Aj is an access frequency for a jth content item, Sj is a size of the jth content item, and Cij a cost function of an ith cache server among the plurality of the cache servers, the content disposition determination unit disposes content items in a cache server that minimizes $\sum_j C_{ij}*A_j*S_j$.

3. The content distribution system according to claim 2, wherein
   the content distribution determination unit computes the cost function Cij, based on load information on the ith cache server of the plurality of cache servers, the topology information of the mobile network, and the in-zone information of the terminal, or the load information and the topology information.

4. The content distribution system according to any one of claims 1 to 3, wherein
   the content distribution determination unit instructs the plurality of cache servers to obtain a content item from another cache server among the plurality of cache servers or a distribution server apparatus on the Internet, according to the determined disposition.

5. The content distribution system according to claim 4, wherein
   the content disposition determination unit instructs one of the plurality of cache servers to obtain a content item to be stored in the one of the plurality of cache servers from another cache server among the plurality of cache servers when the content item is held by the other cache server, and otherwise instructs the one of the plurality of cache servers to obtain the content item from a distribution server apparatus on the Internet.

6. The content distribution system according to claim 4 or 5, wherein
the content disposition determination unit determines disposition of content items for a cache server among the plurality of cache servers with an access frequency of accesses exceeding a predetermined threshold value.

7. The content distribution system according to any one of claims I to 3, wherein
the content distribution determination unit instructs the plurality of cache servers to obtain a content item from a storage apparatus provided on the mobile network and to hold the content item, according to the determined disposition.

8. The content distribution system according to claim 7, wherein
the content disposition determination unit determines disposition of a predetermined portion of content items stored in the storage apparatus in the plurality of cache servers.

9. The content distribution system according to claim 7 or 8, wherein
the content disposition determination unit determines disposition of content items for a predetermined plurality of the plurality of cache servers or a plurality of the plurality of cache servers satisfying a predetermined condition.

10. The content distribution system according to any one of claims 1 to 9, wherein
the content disposition determination unit determines disposition of content items for each predetermined time or when a predetermined condition is satisfied.

11. The content distribution system according to any one of claims I to 10, wherein
the access measurement unit collects the number of accesses to a content item stored in the plurality of cache servers for each predetermined period of time or when a predetermined condition is satisfied.

12. The content distribution system according to any one of claims I to 11, wherein
the plurality of packet forwarding apparatuses are an SGSN (Serving General packet radio service Support Node) apparatus, a GGSN (Gateway General packet radio service Support Node) apparatus, or an SGSN/GGSN apparatus on a mobile packet network, or an S-GW (Serving Gateway) apparatus, a P-GW (Packet data network Gateway) apparatus, or an S/P-GW (Serving/Packet data network Gateway) apparatus on a mobile EPC (Evolved Packet Core) network.

13. The content distribution system according to any one of claims 1 to 12, wherein
the content items include at least one of a moving image, a still image, sound, audio, software, an application, and data.

14. A control apparatus that controls in a mobile network a plurality of cache servers that temporarily hold a content item, the control apparatus comprising:

an access measurement unit that computes an access frequency for a content item stored in the plurality of cache servers based on a number of accesses to the content item;
a content disposition determination unit that determines disposition of content items in the plurality of cache servers, using at least one of a load status of the plurality of cache servers, topology information of the mobile network, in-zone information of a terminal requesting a content item, and the access frequency to instruct the plurality of cache servers to obtain a content item according to the determined disposition; and
a cache server selection unit that, upon receipt of a request for a content item from the terminal, instructs a cache server that holds the content item among the plurality of cache servers to transmit the content item through a packet forwarding apparatus.

15. The control apparatus according to claim 14, wherein
when Aj is an access frequency for a jth content item, Sj is a size of the jth content item, and Cij is a cost function of an ith cache server among the plurality of the cache servers, the content disposition determination unit disposes content items in a cache server that minimizes $\sum_j Cij*Aj*Sj$.

16. The control apparatus according to claim 15, wherein

the content distribution determination unit computes the cost function Cij, based on load information on the ith cache server of the plurality of cache servers, the topology information of the mobile network, and the in-zone information of the terminal, or the load information and the topology information.

**17.** The control apparatus according to any one of claims 14 to 16, wherein
the content distribution determination unit instructs the plurality of cache servers to obtain a content item from another cache server among the plurality of cache servers or a distribution server apparatus on the Internet, according to the determined disposition.

**18.** The control apparatus according to claim 17, wherein
the content disposition determination unit instructs one of the plurality of cache servers to obtain a content item to be stored in the one of the plurality of cache servers from another cache server among the plurality of cache servers when the content item is held by the other cache server, and otherwise instructs the one of the plurality of cache servers to obtain the content item from a distribution server apparatus on the Internet.

**19.** The control apparatus according to any one of claims 14 to 16, wherein
the content distribution determination unit instructs the plurality of cache servers to obtain a content item from a storage apparatus provided on the mobile network and to hold the content item, according to the determined disposition.

**20.** A content distribution method, comprising:

by a control apparatus that controls in a mobile network a plurality of cache servers that temporarily hold a content item, computing an access frequency for a content item stored in the plurality of cache servers based on a number of accesses to the content item;
determining disposition of content items in the plurality of cache servers, using at least one of a load status of the plurality of cache servers, topology information of the mobile network, in-zone information of a terminal requesting a content item, and the access frequency;
instructing the plurality of cache servers to obtain a content item according to the determined disposition; and
upon receipt of a request for a content item from the terminal, instructing a cache server that holds the content item among the plurality of cache servers to transmit the content item through a packet forwarding apparatus.

**21.** The content distribution method according to claim 20, wherein
when Aj is an access frequency for a jth content item, Sj is a size of the jth content item, and Cij is a cost function of an ith cache server among the plurality of the cache servers, content items are disposed in a cache server that minimizes $\sum_j Cij*Aj*Sj$.

**22.** The content distribution method according to claim 21, wherein
the cost function Cij is computed, based on load information on the ith cache server of the plurality of cache servers, the topology information of the mobile network, and the in-zone information of the terminal, or the load information and the topology information.

**23.** The content distribution method according to any one of claims 20 to 22, comprising:

instructing the plurality of cache servers to obtain a content item from another cache server among the plurality of cache servers or a distribution server apparatus on the Internet, according to the determined disposition.

**24.** The content distribution method according to claim 23, comprising:

instructing selected one of the plurality of cache servers to obtain a content item to be stored in the one of the plurality of cache servers from another cache server among the plurality of cache servers when the content item is held by the other cache server, and otherwise instructing the one of the plurality of cache servers to obtain the content item from a distribution server apparatus on the Internet.

**25.** The content distribution method according to any one of claims 20 to 22, comprising:

instructing the plurality of cache servers to obtain a content item from a storage apparatus provided on the mobile network and to hold the content item, according to the determined disposition.

# FIG. 1

MOBILE NETWORK 150

STORAGE APPARATUS 120

SGSN/GGSN APPARATUS 190_1

RNC APPARATUS 195_1

180_1
180_M

CACHE SERVER 110_1

195_L

RNC APPARATUS

181_1
181_M

CONTROL APPARATUS 160

SGSN/GGSN APPARATUS 190_2

182_1

POLICY APPARATUS 165

CACHE SERVER 110_2

RNC APPARATUS 197_1

182_M    183_1

SGSN/GGSN APPARATUS 190_N

RNC APPARATUS

183_M

CACHE SERVER 110_N

197_L

MOBILE TERMINAL 170

EP 2 701 070 A1

FIG. 2

160

## CONTROL APPARATUS

161

TO 165

TO 190
TO 110

### CONTROL SIGNAL TRANSMITTING/RECEIVING UNIT

REQUESTED CONTENT

COMMUNICATION ZONE

LOAD

184

### ACCESS MEASUREMENT UNIT

167

### CONTENT MAP CREATION AND STORAGE UNIT

187

### CACHE SERVER SELECTION UNIT

185

### CONTENT DISPOSITION DETERMINATION UNIT

EP 2 701 070 A1

# FIG. 3

**110_1**

## CACHE SERVER

**111**

CONTROL SIGNAL TRANSMITTING/RECEIVING UNIT

**116** CONTENT LIST CREATION UNIT

**115** ANALYSIS UNIT

**130** ACCESS COUNTING UNIT

**135** LOAD STATUS DETECTION UNIT

**112** CONTENT PROCUREMENT UNIT

**113** CONTENT TEMPORARY STORAGE UNIT

EP 2 701 070 A1

FIG. 4

MOBILE LTE/EPC NETWORK 250

290_1 S/P-GW APPAR-ATUS

120 STORAGE APPARATUS

260_1 eNodeB APPAR-ATUS

260_M eNodeB APPAR-ATUS

110_1 CACHE SERVER

160 CONTROL APPAR-ATUS

290_2 S/P-GW APPAR-ATUS

261_1 eNodeB APPAR-ATUS

261_M eNodeB APPAR-ATUS

165 POLICY APPAR-ATUS

110_2 CACHE SERVER

262_1 eNodeB APPAR-ATUS

290_N S/P-GW APPAR-ATUS

262_M eNodeB APPAR-ATUS

110_N CACHE SERVER

170 MOBILE TERMINAL

EP 2 701 070 A1

24

FIG. 5

FIG. 6

CONTROL APPARATUS 160

161 CONTROL SIGNAL TRANSMITTING/RECEIVING UNIT

TO 165

TO 190
TO 110

REQUESTED CONTENT

COMMUNICATION ZONE

LOAD

184 ACCESS MEASUREMENT UNIT

167 CONTENT MAP CREATION AND STORAGE UNIT

187 CACHE SERVER SELECTION UNIT

185 CONTENT DISPOSITION DETERMINATION UNIT

# FIG. 7

110_1

**CACHE SERVER**

111

**CONTROL SIGNAL TRANSMITTING/RECEIVING UNIT**

116 — **CONTENT LIST CREATION UNIT**

115 — **ANALYSIS UNIT**

130 — **ACCESS COUNTING UNIT**

135 — **LOAD STATUS DETECTION UNIT**

112 — **CONTENT PROCUREMENT UNIT**

113 — **CONTENT TEMPORARY STORAGE UNIT**

EP 2 701 070 A1

FIG. 8

## INTERNATIONAL SEARCH REPORT

International application No.

PCT/JP2012/060673

A. CLASSIFICATION OF SUBJECT MATTER
*G06F13/00(2006.01)i*

According to International Patent Classification (IPC) or to both national classification and IPC

B. FIELDS SEARCHED

Minimum documentation searched (classification system followed by classification symbols)
G06F13/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2009-104381 A (Fujitsu Ltd.),<br>14 May 2009 (14.05.2009),<br>paragraphs [0051] to [0104]; fig. 1<br>& US 2009/0106358 A1 | 1-25 |
| Y | JP 2003-216521 A (Nippon Telegraph and Telephone Corp.),<br>31 July 2003 (31.07.2003),<br>paragraphs [0031] to [0052]; fig. 1<br>(Family: none) | 1-25 |
| Y | JP 2010-113460 A (Nippon Telegraph and Telephone Corp.),<br>20 May 2010 (20.05.2010),<br>paragraphs [0021] to [0040]; fig. 2<br>(Family: none) | 2-3,15-16,<br>21-22 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 June, 2012 (28.06.12) | 10 July, 2012 (10.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011096252 A
- JP 2011096253 A
- JP P2003228534 A